# DEMANDE DE BREVET EUROPEEN

(11) **EP 0 919 430 A1**
(43) Date de publication de la demande: **02.06.1999**
(21) Numéro de dépôt: 98490031.6
(22) Date de dépôt: 26.11.1998
(51) Int. Cl.: B60N 3/04

(54) **Dispositif de blocage en position d'un tapis de sol accessoire pour véhicule automobile**

(30) Priorité: 28.11.1997 FR 9715247; 24.06.1998 FR 9808177
(71) Demandeur: Fabrication d'Accessoires de Carrosserie pour Automobiles et Motos FACAM, 59115 Leers (FR)
(72) Inventeur: Mace de Gastines, Christophe, 59420 Mouvaux (FR); Ouvry, Mickael, 59155 Faches Thumesnil (FR)
(74) Mandataire: Hénnion, Jean-Claude

(57) **Abrégé**

L'invention concerne un dispositif pour le blocage en position d'un tapis de sol accessoire (1) pour automobile par rapport à une garniture (3) protégeant le plancher (2). Il consiste en une pièce rigide (5) , de section transversale en forme de U , dont une branche latérale inférieure (10), en contact avec la garniture (3), est munie extérieurement d'au moins une dent (11) inclinée vers la base (9) du U, l'écartement (E) entre les deux branches (8,10) du U étant supérieur à la hauteur (e) du tapis.

La ou les dents (18) sont portées par une pièce articulée (14), grâce à une charnière (15), par rapport à la pièce rigide (13) de section en U entre une première position d'escamotage .

L'invention concerne aussi un ensemble constitué d'un tapis et d'une pluralité de dispositifs (5) précité, le tapis (1) comportant au moins dans la zone antérieure (6) destinée à venir sous les pédales un bord plan (1a) et l'ensemble comprenant au moins deux dispositifs (5), destinés à venir bloquer en position ledit tapis (1) au moins au niveau dudit bord plan (1a).

## Description

La présente invention concerne un dispositif particulier destiné à bloquer en position un tapis de sol protégeant le plancher d'une automobile ou d'un autre véhicule, de manière accessoire, c'est-à-dire d'un plancher qui est déjà lui-même revêtu d'une garniture de protection du type moquette. Elle concerne également un ensemble constitué d'un tel tapis et d'une pluralité de dispositifs de blocage.

Le tapis de sol accessoire a pour but de protéger le revêtement de sol équipant , en première monte, le véhicule automobile, de manière à ce que ledit revêtement conserve tout son attrait même après une longue période d'utilisation. Il suffit à l'utilisateur de nettoyer périodiquement le tapis accessoire et de le remettre en place sur le revêtement de sol.

De manière optimale il conviendrait que le tapis de sol accessoire vienne se superposer parfaitement au revêtement de sol de première monte. Ceci n'est cependant pas possible et les producteurs de tapis de sol accessoire proposent différents modèles de tapis s'adaptant au mieux d'une gamme déterminée de véhicules. En pratique le tapis de sol accessoire est donc de dimensions inférieures à celles du revêtement de sol qu'il doit protéger.

Cette différence de dimensionnement peut présenter un inconvénient important qui consiste dans le déplacement relatif du tapis accessoire par rapport au revêtement de sol. En effet lorsque l'usager monte dans son véhicule, y séjourne et en descend , il réalise involontairement un grand nombre de mouvements de ses pieds en contact avec le tapis de sol accessoire, mouvements qui occasionnent des déplacements dudit tapis sur le revêtement de sol.

On a déjà cherché à éviter ce déplacement relatif en proposant différentes solutions. Une première solution ,décrite dans le document EP.220.305, consiste à revêtir la face inférieure du tapis de sol accessoire d'une couche de mousse à cellules ouvertes. Etant donné que le revêtement de sol, de première monte, est généralement une moquette textile, les fibres superficielles de cette moquette viennent s'appliquer dans les cellules ouvertes de la mousse, ce qui augmente de manière importante le coefficient de frottement entre ces deux surfaces et diminue donc la capacité de déplacement du tapis de sol accessoire par rapport à ladite moquette. Une seconde solution, proposée par le document FR.2.677.590 consiste à fixer sous le tapis accessoire une plaque rigide comportant , sur la face destinée à être tournée vers le revêtement de sol, des dents inclinées, lesdites dents venant se planter dans le revêtement de sol et contrarier le déplacement du tapis. Cette plaque est fixée notamment à l'aide d'un rivet. Une troisième solution, proposée par le document US.4,860,402 consiste à venir placer le long du bord du tapis accessoire une pièce en U déformable comportant au moins une dent supérieure et deux dents inférieures, à déformer la pièce en comprimant les branches du U en sorte que la dent supérieure pénètre dans la face supérieure du tapis accessoire et à faire pénétrer les dents inférieures dans le revêtement de sol. Les dents inférieures sont tournées vers l'extrémité libre de la branche latérale du U qui les porte.

La première solution présente l'inconvénient de devoir ajouter sur la face inférieure du tapis une couche supplémentaire en mousse à cellules ouvertes, ce qui nécessite , en plus du coût proprement dit de cette couche supplémentaire, une opération additionnelle lors de la fabrication du tapis accessoire.

En ce qui concerne la plaque rigide de la seconde solution, elle présente plusieurs inconvénients. Le premier est de nécessiter également une opération additionnelle qui réside dans la fixation , par exemple par rivetage , de la plaque au tapis. Le second inconvénient réside dans les risques d'éraillage que peuvent provoquer les dents inclinées lors des retraits successifs du tapis accessoire à l'occasion des divers nettoyages dudit tapis.

La troisième solution présente l'inconvénient que, lorsqu'on soulève le tapis accessoire, ou bien la pièce reste accrochée sur le tapis ou bien il faut ouvrir les branches du U pour la retirer ; de plus la demanderesse a constaté que si la pièce est placée selon le bord avant du tapis accessoire , les dents inférieures ont tendance à sortir du revêtement de sol.

Le but que s'est fixé le demandeur est de proposer une voie s'apparentant à celle de la troisième solution mais qui pallie les inconvénients précités.

Ce but est parfaitement atteint par le dispositif de l'invention destiné à assurer le blocage en position d'un tapis de sol accessoire pour véhicule automobile par rapport à une garniture de protection protégeant le plancher dudit véhicule.De manière connue par le document US.4,860,402 il consiste en une pièce, de section transversale en forme de U, dont la branche latérale inférieure destinée à venir en contact avec la garniture de protection , est munie extérieurement d'au moins une dent inclinée. De manière caractéristique,la pièce étant rigide, la dent est inclinée vers la base du U ; de plus l'écartement (H) entre les deux branches latérales du U est supérieur à la hauteur (h) du tapis.

Le dispositif de blocage de l'invention est indépendant du tapis accessoire proprement dit et en particulier reste accroché à demeure sur la garniture de protection du plancher lorsque le tapis est retiré pour être nettoyé.

Lors de la première mise en place du tapis accessoire, il suffit de disposer le ou de préférence les dispositifs de blocage, selon l'invention, à cheval sur le bord du tapis , selon certaines zones de celui-ci. On place ensuite le tapis sur la garniture de protection du plancher, à l'endroit approprié. La ou les zones dans lesquelles doit être placé le dispositif de blocage selon l'invention sont des zones qui se trouvent vers l'avant du tapis, si l'on prend comme référence la direction de déplacement de celui-ci sous l'action habituelle des pieds de l'utilisateur. La zone privilégiée est donc celle destinée à se trouver la plus à proximité des pédales du véhicule. En effet on constate qu'un tapis de sol accessoire a tendance, naturellement, à se rapprocher des pédales voire même à venir se bloquer sous celles-ci, formant éventuellement des plis, ce qui est un risque très important d'accidents. La ou les dents qui équipent la branche latérale inférieure de la pièce rigide sont inclinées vers la base du U , de telle sorte que le déplacement naturel du tapis fait pénétrer les dents dans la garniture de protection et empêche, de ce fait , la pièce rigide de se déplacer. Cet ancrage de la pièce rigide dans la garniture de protection permet que celle-ci constitue une butée efficace pour le tapis . Le bord du tapis , qui vient se loger entre les deux branches latérales ne peut plus progresser, en étant empêché par la base du U , ni former de plis du fait de la présence de la branche latérale supérieure.

De préférence , le dispositif selon l'invention comporte deux dents inclinées, disposées sensiblement à la même hauteur de la branche latérale inférieure. Il y a donc , pour le dispositif en question , deux points d'ancrage , ce qui évite au dispositif de pouvoir pivoter sur lui-même.

De préférence la branche latérale inférieure a une hauteur qui est supérieure à celle de la branche latérale supérieure et les dents sont situées dans la partie de la branche inférieure la plus éloignée de la base du U.

La première mise en place du tapis accessoire tel que décrite ci-dessus peut cependant poser quelques difficultés dans la mesure où les dents qui équipent les branches latérales inférieures des pièces rigides positionnées selon le bord du tapis peuvent s'accrocher involontairement sur la garniture de protection du plancher lors de son positionnement préalable. De plus ces mêmes dents peuvent être la source d'accidents lors de l'ouverture de l'emballage du tapis accessoire ou lors de la manipulation de celui-ci.

On pallie à ces inconvénients grâce au dispositif selon l'invention qui est caractérisé en ce que la ou les dents sont portées par une pièce articulée autour d'une charnière intérieure au U de la pièce rigide, entre une première position d'escamotage dans laquelle la ou les dents ne dépassent pas de la branche latérale inférieure et une seconde position active dans laquelle la ou les dents dépassent extérieurement de la branche latérale inférieure , éventuellement par une ou des ouvertures pratiquées dans ladite branche latérale inférieure.

Ainsi, selon la configuration particulière précitée, dans l'emballage et dans la manipulation préalable du dispositif , la ou les dents ne sont pas directement accessibles et ne sont pas susceptibles d'être une gêne. Il suffit lors du positionnement de la pièce rigide sur la garniture de protection du plancher de faire passer la pièce articulée supportant la ou les dents depuis sa première à sa seconde position. Au cours de ce pivotement autour de la charnière ,les dents qui se trouvent au-dessus de la branche latérale inférieure de la pièce rigide pivotent angulairement autour de la charnière et pénètrent dans la garniture de protection.

Une telle pénétration se fait dans d'excellentes conditions en particulier avec un décalage angulaire entre la première et la deuxième positions de 30° et un angle d'inclinaison de la ou des dents par rapport à la branche latérale inférieure de 60°.

De préférence le blocage de la pièce articulée dans la première position d'escamotage est obtenu grâce à une butée amovible, apte à empêcher le déplacement angulaire de la pièce articulée de la première à la seconde positions.

Dans une variante préférée de réalisation,. cette butée est constituée par un plot monté à l'extrémité d'une tirette qui a une longueur légèrement supérieure à la largeur de la branche latérale inférieure et qui coulisse transversalement dans une glissière pratiquée dans ladite branche.

Ainsi dans la première position d'escamotage, la tirette dépasse légèrement de la branche latérale inférieure et le plot se trouve en contact avec la pièce articulée, servant de butée angulaire à celle-ci . Pour passer à la seconde position active, il suffit de repousser l'extrémité qui dépasse de la tirette de manière à la faire coulisser dans la glissière, ce qui a pour effet de déplacer le plot qui se trouve à l'extrémité opposée. Lors de ce déplacement, le plot quitte le contact qu'il avait avec la pièce articulée, qui devient libre de pivoter angulairement.

Selon un mode particulier de fabrication ,le dispositif de l'invention est constituée de deux ou de trois pièces en matière plastique assemblées. La charnière d'articulation entre la pièce portant la ou les dents et la branche latérale inférieure de la pièce rigide peut simplement être constituée par une configuration particulière desdites pièces , coopérant par encliquetage lors de leur assemblage.

De plus avantageusement le dispositif de l'invention comporte deux dents qui sont formées à partir d'une même tige métallique en U dont la portion médiane est coulée dans la pièce plastique. De préférence cette portion médiane a également une forme en U dont les trois branches sont dans le plan de la pièce plastique articulée. Cette disposition particulière permet d'obtenir un ancrage amélioré de cette partie médiane avec la matière plastique et , en définitive, d'obtenir que le dispositif de l'invention puisse résister à des fortes contraintes mécaniques lors de son utilisation.

Le but de la présente invention est aussi de revendiquer un ensemble constitué d'un tapis de sol accessoire pour automobile et d'une pluralité de dispositifs de blocage ayant les caractéristiques précitées. Selon l'invention la zone du tapis qui est destinée à venir sous les pédales présente un bord plan ; de plus l'ensemble comprend au moins deux dispositifs de blocage, dont l'écartement entre les deux branches latérales est légèrement supérieur à la hauteur du tapis au niveau dudit bord plan.

La présente invention sera mieux comprise à la lecture de la description qui va être faite d'un exemple préféré de réalisation d'un tapis de sol accessoire pour véhicule automobile équipé de quatre pièces rigides de blocage en position, illustré par le dessin annexé dans lequel :
- La figure 1 est une vue en plan partielle de l'intérieur d'un véhicule équipé d'un tapis accessoire avec quatre dispositifs de blocage de l'invention,
- La figure 2 est une vue en coupe partielle de la figure 1 selon l'axe II-II et,
- La figure 3 est une vue en coupe longitudinale de la variante du dispositif de l'invention avec charnière.

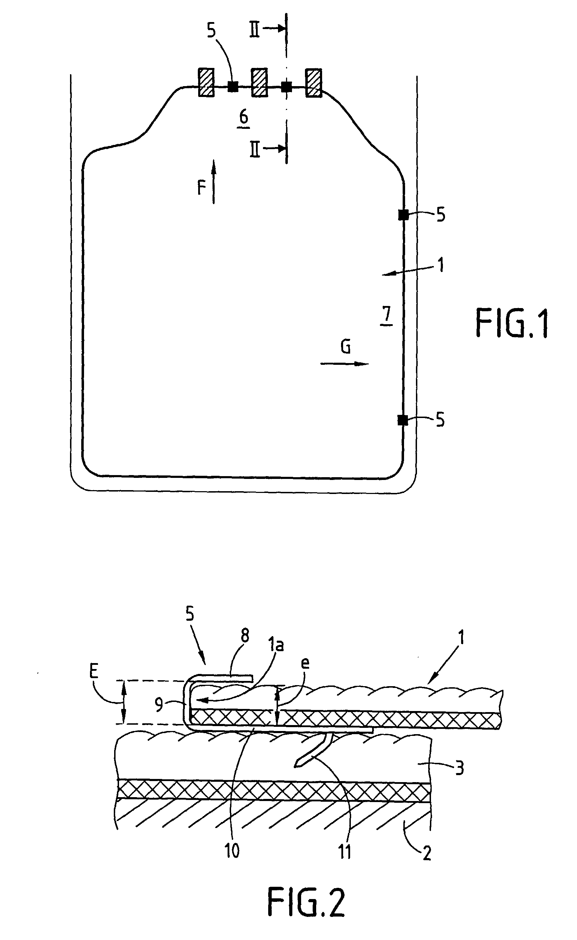

Le tapis de sol accessoire 1, qui est illustré à la figure 1, équipe la place avant gauche du véhicule, c'est-à-dire celle qui est située devant le siège du conducteur. Le plancher 2, au niveau de cette place, est recouvert , en première monte , d'un revêtement de sol 3, sur lequel doit être posé le tapis accessoire 1.

Des constatations menées par le demandeur , il ressort que le tapis 1 est naturellement soumis à un double déplacement possible, selon les utilisateurs. Le déplacement le plus fréquent est celui qui tend à le repousser vers les pédales le tapis , selon la flèche F. L'autre déplacement, qui peut également se produire, est un déplacement latéral vers la droite selon la flèche G.

Conformément à l'invention , on dispose selon le bord périphérique du tapis 1 des pièces rigides 5 de blocage selon les zones les plus en avant des directions de déplacement, c'est-à-dire dans le cas d'espèce dans la zone antérieure 6 et dans la zone latérale droite 7. Dans l'exemple illustré, on a placé quatre pièces 5, deux dans la zone antérieure 6 et deux dans la zone latérale droite 7, les pièces étant suffisamment décalées les unes des autres.
Comme illustrée à la figure 2, chaque pièce a une forme en U, réalisée par exemple par pliage à partir d'une plaque métallique, avec une branche latérale supérieure 8 , une base 9 et une branche latérale inférieure 10. Les adjectifs supérieur et inférieur sont donnés en référence à la position adoptée par la pièce 5 par rapport au tapis 4, lorsque celle-ci est placé sur le revêtement de sol 3. Le bord périphérique 1a du tapis 1 doit pouvoir venir se loger entre les deux branches latérales 8, 10 de la pièce 5, venant en butée contre la face intérieure de la base 9. Pour cela il est nécessaire que l'épaisseur e du tapis 1, au moins au niveau dudit bord périphérique la, soit inférieure à l'écartement E entre les deux branches latérales 8, 10.

La face extérieure de la branche inférieure 10 de la pièce 5 est munie de une ou de préférence de plusieurs dents 11 qui ont une direction générale oblique, étant inclinée vers la base 9 de la pièce 5. Cette inclinaison va dans le sens de la direction générale du déplacement du tapis 4, selon la flèche F dans le cas des pièces 5 placées dans la zone antérieure 6 du tapis et selon la flèche G pour celles placées dans la zone latérale droite 7 du tapis.

Lors de la première mise en place du tapis 1 sur le revêtement 3, l'usager positionne préalablement les quatre pièces 5 selon les emplacements adéquats en faisant pénétrer le bord périphérique 1a du tapis 1 dans le logement que forme la partie intérieure du U , entre les deux branches latérales 8, 10 et la base 9 jusqu' à ce que ledit bord périphérique 1a vienne en butée contre la base 9. L'utilisateur place ensuite le tapis 1 et les quatre pièces 5 sur le revêtement de sol 3, ajustant sa position de manière à ce que les pièces 5 soient situées en retrait par rapport aux pédales de manière à ne pas gêner le bon fonctionnement du véhicule. Par simple déplacement du tapis , l'utilisateur peut faire pénétrer les dents 11 dans la garniture textile du revêtement de sol 3, réalisant ainsi l'ancrage des pièces 5 qui sont localisées une fois pour toutes et servent de butées pour le tapis.

Lorsque l'usager veut effectuer le nettoyage du tapis , il lui suffit de faire coulisser celui-ci en sens inverse des flèches F et G, de manière à dégager le bord périphérique 1a des pièces 5. Ce faisant les quatre pièces 5 restent en place. Après nettoyage, le tapis 1 est remis en place dans les mêmes conditions.

Lorsque l'usager veut retirer définitivement les pièces 5, après avoir retiré le tapis 1, il lui suffit d'effectuer une traction sur chaque pièce individuelle 5 dans le sens inverse des flèches respectivement F et G. Cette opération, étant beaucoup plus précise et ponctuelle, il n'y a pas d'éraillage de la garniture du revêtement de sol 3.

Les dents 11 peuvent être obtenues par toute voie appropriée, par exemple par découpe et repoussage d'une partie de la plaque constitutive de la pièce rigide. Chaque pièce individuelle 5 peut être éventuellement dans une matière plastique rigide . On peut également positionner dans l'une ou l'autre des zones antérieure 6 ou latérale droite 7 un seul dispositif de blocage selon l'invention, ayant une plus grande largeur, éventuellement prépositionné sous forme d'une languette dans la zone correspondante.

Dans le cas où le tapis 1 se présente sous la forme d'une cuvette, ayant en périphérie , selon au moins certaines zones , un bord relevé, le dispositif décrit peut malgré tout être utilisé pour autant que le bord relevé puisse venir se loger entre les deux branches latérales 8, 10 de la pièce en U de l'invention, par exemple par écrasement localisé dudit bord relevé. Eventuellement le tapis en question peut présenter , localement une discontinuité, permettant le positionnement de la pièce en U.

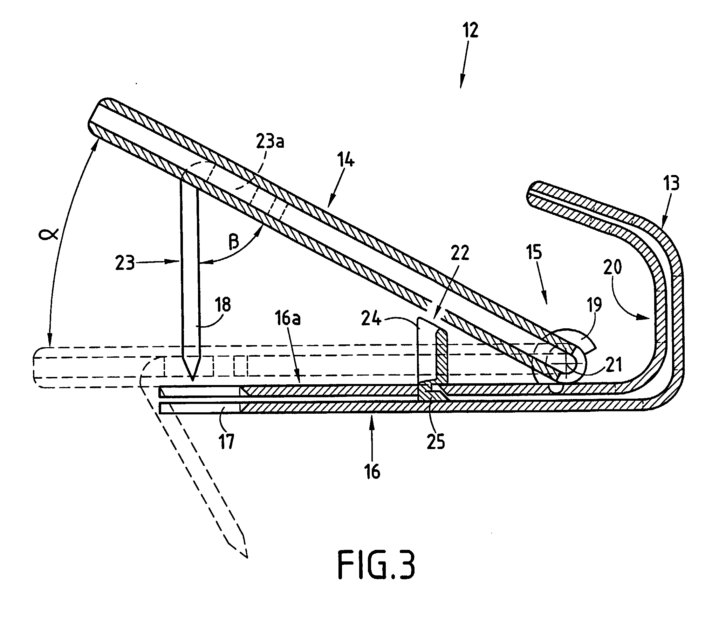

La pièce rigide de blocage décrite dans l'exemple précité était une pièce monobloc dont les dents étaient fixées rigidement à la branche latérale inférieure de ladite pièce. Dans le second exemple de réalisation qui est illustré à la figure 3, le dispositif 12 pour le blocage en position d'un tapis de sol accessoire pour véhicule automobile n'est pas monobloc mais est constitué de deux pièces 13,14, articulées l'une par rapport à l'autre autour d'une charnière transversale 15 . La première pièce 13 a la structure de la pièce rigide en U de l'exemple précité exception faite qu'elle ne comporte pas de dents à demeure fixées à la branche latérale inférieure 16 du U et qu'à l'emplacement de celle-ci sont ménagés des évidements 17. La seconde pièce 14 est une pièce plane qui supporte les dents 18, lesquelles sont inclinées obliquement dans la direction de l'extrémité 21 de cette seconde pièce adaptée pour constituer un élément de la charnière 15. L'autre élément constitutif de la charnière est disposé sur la face supérieure 16a de la branche latérale inférieure 16, vers l'intérieur du U. Dans l'exemple illustré ce second élément 19 est une portion d'arc de cercle partiellement ouverte dans la direction de la base 20 du U. Le premier élément 21 de la charnière constitue l'axe d'articulation, ledit axe pouvant être introduit dans le second élément recourbé 19 par la portion ouverte de l'arc de cercle.

Sur la figure 3 est représentée en ligne continue la première position d'escamotage de la pièce articulée 14. Dans cette position, ladite pièce 14 fait un angle α sensiblement de 30° par rapport à la branche latérale inférieure 16. Les dents 18 font un angle β d'environ 60° par rapport au plan général de la pièce 14 de sorte que , dans cette première position, les dents 18 sont sensiblement perpendiculaires au plan de la branche latérale inférieure 16. Les dimensions respectives des différentes pièces et en particulier des dents 18 sont déterminées en sorte que les dents 18, dans cette première position d'escamotage, ne dépassent pas sous la branche inférieure latérale 16.

De préférence le blocage de la pièce articulée 14 dans cette première position est obtenu par une butée 22, solidaire de la branche latérale inférieure 16 et sur laquelle vient s'appuyer la pièce articulée 14. Cette butée 22 est bien sûr escamotable pour permettre à la pièce articulée 14 de pivoter autour de l'axe 21 pour venir dans la seconde position active qui est représentée sur la figure 3 en pointillés.

Ce pivotement est mis en oeuvre une fois que le dispositif 12 a été disposé le long du bord du tapis accessoire en vue de l'arrimer dans la garniture de protection du véhicule. Lors de ce pivotement la dent 18 pénètre progressivement dans la garniture de protection jusqu'à prendre sa place définitive . Cette pénétration se fait sans à-coup et sans déplacement du dispositif 12.

Dans une variante préférée de réalisation de ce dispositif 12 à charnière , celui-ci est fabriqué à partir de pièces plastiques injectées, plus précisément de trois pièces : la première pièce 13 en U, la deuxième pièce articulée 14 et la troisième pièce 22 formant butée.

S'agissant de la deuxième pièce articulée 14, la fixation des dents 18 dans cette pièce 14 est obtenue en mettant en oeuvre pour la constitution des deux dents une seule tige métallique 23 recourbée en U, les branches les plus extrêmes du U étant effilées à leurs extrémités pour constituer les deux dents 18. La portion médiane 23a de cette tige 23, coulée dans la pièce plastique injectée est elle-même conformée en U avec ses trois branches dans le plan général de la pièce 14 en sorte d'obtenir un meilleur ancrage et une meilleure résistance mécanique.

Quant à la pièce 22 formant butée, elle est constituée d'un plot 24 dont la base est solidaire d'une tirette 25 apte à coulisser dans une glissière pratiquée transversalement dans la branche latérale inférieure 16 de la première pièce 13. La longueur de cette tirette 25 est légèrement supérieure à la largeur de ladite branche latérale inférieure 16. Dans la première position d'escamotage , l'extrémité opposée au plot 24 de la tirette 25 dépasse en dehors de la branche latérale inférieure 16 de sorte que le plot 24 se trouve en contact avec la deuxième pièce articulée 14, faisant ainsi son office de butée. Pour passer à la seconde position active, il suffit de repousser cette extrémité opposée au plot 24 et de faire coulisser la tirette 25 dans la glissière. Ce coulissement déplace corrélativement le plot 24 qui dépasse alors de la branche latérale et se trouve dégagé de la deuxième pièce articulée 14. Celle-ci est alors libre de pivoter vers sa seconde position active où les dents 18 dépassent de la face extérieure de la branche latérale 16 inférieure 16 en passant par les évidements 17.

## Revendications

1. Dispositif pour le blocage en position d'un tapis de sol accessoire (1) pour véhicule automobile par rapport à une garniture de protection (3) protégeant le plancher (2) dudit véhicule, consistant en une pièce, de section transversale en forme de U, dont une branche latérale, dite inférieure (10), destinée à venir en contact avec le revêtement de sol (3), est munie extérieurement d'au moins une dent, caractérisé en ce que la pièce (5) est rigide, en ce que la dent (11) est inclinée vers la base (9) du U, et en ce que l'écartement (E) entre les deux branches (8, 10) du U est supérieur à la hauteur (e) du tapis.

2. Dispositif selon la revendication 1 caractérisé en ce qu'il comporte deux dents inclinées vers la base du U.

3. Dispositif selon la revendication 1 caractérisé en ce que la branche latérale inférieure (10) a une hauteur supérieure à la branche latérale supérieure (8) et en ce que la ou les dents (11) sont situées dans la partie de ladite branche inférieure (10) la plus éloignée de la base (9) du U.

4. Dispositif selon l'une des revendications 1 à 3 caractérisé en ce que la ou les dents (18) sont portées par une pièce articulée (14), grâce à une charnière (15), par rapport à la pièce rigide (13) de section en U entre une première position d'escamotage dans laquelle la ou les dents (18) ne dépassent pas de la branche latérale inférieure (16) de la pièce rigide (13) et une seconde position active dans laquelle la ou les dents (18) dépassent extérieurement de la branche latérale inférieure (16), éventuellement par une ou des ouvertures (17) pratiquées dans ladite branche latérale inférieure (16).

5. Dispositif selon la revendication 4 caractérisé en ce qu'il comporte une butée amovible (22), apte à empêcher le déplacement angulaire de la pièce articulée (14) de la première à la seconde position.

6. Dispositif selon la revendication 5 caractérisé en ce que la butée est constituée par un plot (24) monté à l'extrémité d'une tirette (25) ayant une longueur légèrement supérieure à la largeur de la branche latérale inférieure (16) et coulissant transversalement dans une glissière pratiquée dans ladite branche (16).

7. Dispositif selon l'une des revendications 4 à 6 caractérisé en ce qu'il est constitué de deux ou trois pièces plastiques assemblées.

8. Dispositif selon la revendication 7 caractérisé en ce qu'il comporte deux dents (18) qui sont formées à partir d'une seule tige métallique (23) à double courbure en U dont la portion médiane (25) est coulée dans la pièce plastique articulée (14).

9. Ensemble constitué d'un tapis et d'une pluralité de dispositifs (5) selon l'une des revendications 1 à 8 caractérisé en ce que le tapis (1) comporte au moins dans la zone antérieure (6) destinée à venir sous les pédales un bord plan (1a) et en ce que l'ensemble comprend au moins deux dispositifs (5), destinés à venir bloquer en position ledit tapis (1) au moins au niveau dudit bord plan (1a).
